# EUROPEAN PATENT APPLICATION

(11) **EP 1 865 436 A1**
(43) Date of publication of application: **12.12.2007**
(21) Application number: 06300567.2
(22) Date of filing: 07.06.2006
(51) Int. Cl.: G06F 21/20

(54) **A personal token with enhanced communication ability by predicting an upcoming command**

(71) Applicant: Axalto S.A., 92190 Meudon (FR)
(72) Inventor: Boutet, Olivier Axalto S.A., Int. Prop. Dept., 92190, Meudon (FR); Chatelain, Denis Axalto S.A., Int. Prop. Dept., 92190, Meudon (FR); Delaunay, Eric Axalto S.A., Int. Prop. Dept., 92190, Meudon (FR)
(74) Representative: Jacquot, Ludovic R. G.

(57) **Abstract**

The invention relates to a personal token comprising a processing and a memory equipment, characterized in that it comprises a logic for interpreting a received command and deducing from said received command an expected upcoming command (B, C), said logic initiating a preparation (107,107a) of an answer (B', C') to the expected command (B, C) which preparation begins before said expected command (B, C) is received.

## Description

The invention relates to personal tokens used for authenticating a user when such user accesses to a limited or a private resources equipment such as a mobile telecommunication network, a remote server storing secret data or even a protected area with limited physical access thereto, such as the national territory of a given country in the case of an electronic passport.

The mostly known device of this type is the IC card such as for example a SIM card (Subscriber Identification Module) or a credit card, but it can also be a USB key, a mass memory card, or any kind of token carrying some necessary credentials. An electronic passport, either with a credit card form factor or in the form of a series of pages, i.e. having the form factor of a classical passport, is another example of a personal token.

Personal tokens have limited processing and memorizing abilities. With ever growing amounts of data transferred to and from the token, and due to continuing need for efficiency as to speed of use, there is a need for enhancing the way a token exchanges data with the exterior.

In such respect it is a main purpose of the invention to provide a personal token such as an electronic passport or a SIM card which performs exchanges of data with higher efficiency.

This purpose is achieved by way of the invention as recited in the appended claims.

Other purposes, benefits and aspects of the invention will appear through the following description, which is made in reference to the appended figures, among which:
- Figure 1 is a diagram that represents a method of exchanging data between a personal token according to the invention and associated terminal.
- Figure 2 depicts a flow of data between a personal token according to the invention and an associated terminal,
- Figure 3 depicts a flow of data between a personal token according to the invention and an associated terminal, in the case of a partly prepared response to a following command.

A preferred embodiment will now be described in the context of a contactless electronic passport and an associated reader/writer such as one placed at an immigration checking desk in an airport.

The described electronic passport comprises a integrated circuit placed inside a passport body, and an antenna also placed in the passport body. The passport body is considered here as a set of pages, one of which carries the integrated circuit and the antenna.

The passport thereby becomes a contactless passport which has simply to be placed in close vicinity to a reader such as one placed at an immigration point in an airport.

The integrated circuit comprises a processing entity and a memory entity. Both concur to storing and running an embedded operating system. The operating system is mainly in charge of managing exchanges of data between software of the passport and physical equipments of the token, such as the antenna or the memory parts of the passport.

In the particular case of an electronic passport, reading time dedicated to reading the data in the passport must be very short. Indeed, the person who placed the passport in vicinity to the reader expects a sensibly immediate answer.

The present embodiment of the invention takes benefit of an expected behavior of the externally associated reader so as to enhance efficiency of the exchange of data.

As an example, once a file of the passport is selected by the reader, it is highly probable that it will be completely read till the end of file with commands such as the READ BINARY. More generally it appears that a whole set of couples of commands can be defined, each couple consisting in a given command together with the command which is most likely about to follow the given command. Such a large set of couples of commands is easily established, depending on the application of the personal token (passport, SIM card, credit card...), through a statistical study of the typical series of commands that a token encounters when being used with the typical reader/writer available. Such interpretation of a given command so as to forecast the following command is performed by a logic of the passport, typically consisting in a program stored in the memory of passport and which is run by the processor of the passport.

Here, by predicting a command, the operating system is able to prepare the whole or a part of the answer to the next command in advance.

If the next command can then be confirmed as being the expected one, the operating system sends its already prepared answer straightly from its internal cache memory. Therefore, it saves time because the Operating System does not need to spend time in the classic command process after the command is received i.e. understanding the associated command, checking the access rights associated with this command, and preparing the appropriate answer to this command. If the next command appears to be different from the expected one, then the operating system will use the default classic command process as usual.

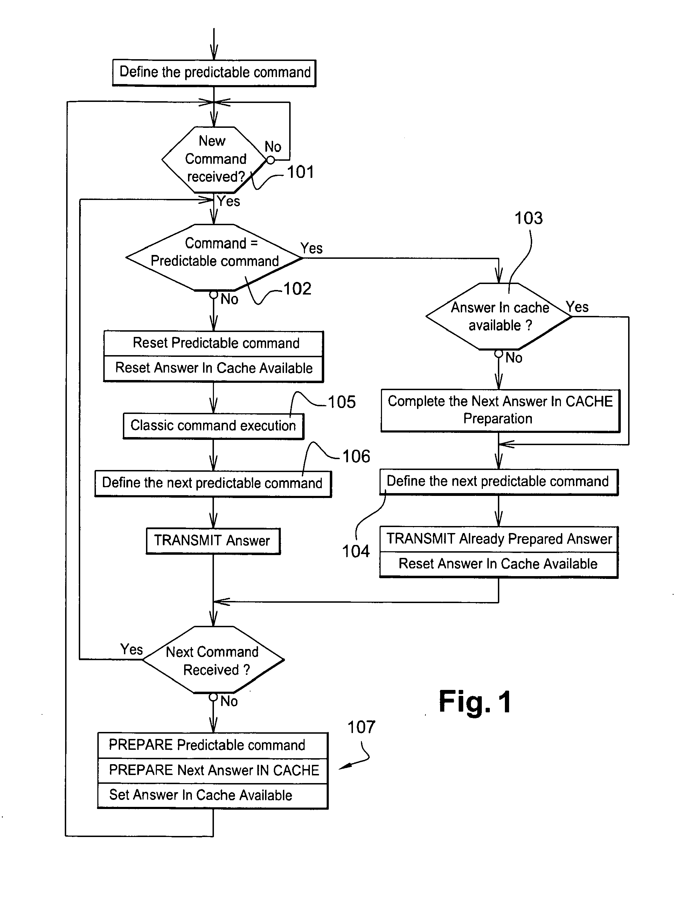

The process through which the commands are predicted and handled is depicted on figure 1.

Let's take as a hypothesis that the passport has received a first command and that this first command allows to predict what the second command will be. This hypothesis is represented as step 100 on figure 1.

At step 101, a check is made so as to know whether the second command has been received. If yes, a check is made at step referenced 102 so as to know whether the received command is the expected one.

In the positive case, a checking step is performed under reference 103 so as to assess whether an answer to this predictable command has been prepared by the token and is available in cache memory, then a next predictable command is defined at step 104 and eventually the prepared and available answer is delivered.

In the negative case, i.e. the received command is not the expected one, a classic command execution is performed at step referenced 105, a next predictable command is defined at step referenced 106 and the prepared and available answer is then delivered.

After anyone of these two possibilities, the answer to a new predictable command is prepared and placed in cache memory.

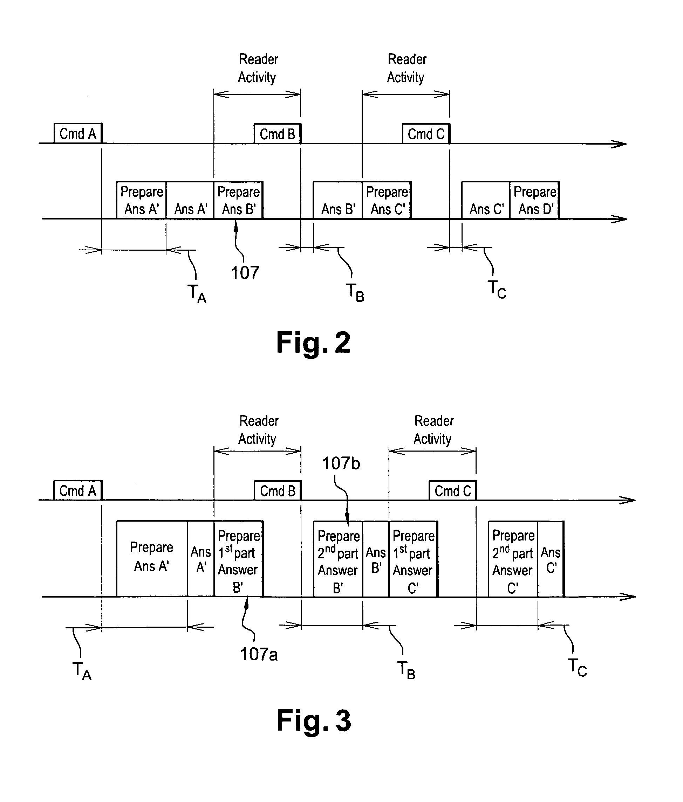

As depicted on figure 2 along a time axis corresponding to these different steps, a command A allows the operating system to predict the next arriving command B, which will appear to be the expected one in the present example.

The Operating System saves time in preparing an answer B' to this second command B before receiving it at step 107.Therefore, the duration which separates receiving of command B and the answer B' is reduced as compared with a classical command execution time. In comparison, this duration T_{B} is far reduced in comparison to the required duration T_{A} for providing a response A' to the command A.

Figure 2 depicts the same processing as to a third and also predictable command C.

As depicted now on figure 3, available time may not be sufficient for the token to prepare the response to the following command.

In this case, if the operating system has not enough time to complete the next answer preparation (because the next incoming command has come), the operating system uses the already prepared part of the answer, and completes the answer preparation after receiving the command.

In this case also, command A allows the operating system to predict what command B is going to be. The operating system saves time in preparing a first part of answer B before receiving command B. Such preparation step is referenced as step 107a on figure 3.

The next part of answer B' is prepared after receiving the expected next command. Such next preparation step is referenced as step 107b on figure 3.

Here also, preparation of the answer B' to the predictable command B is preferably performed during a reader activity so as to optimize efficiency.

On figure 3, T_{B} represents the necessary time for the token to respond to command B, i.e. the time duration which is mainly necessary for preparing the second part of the answer B' to command B.

A more detailed example will now be described in reference to a series of predictable commands, still in the case of a passport associated with a reading terminal in an airport.

Commands of any other kind than reading commands are also predictable, such as for example a write command which follows a launching command for an algorithm, when such write command is due to writing a first and necessary parameter to the considered algorithm. As an other example, a read command from a reader/writer may typically follow a write command from the same reader/writer having written a given value in the case of an application running on the token which application is expected to change the value of such written value, at the same location or elsewhere in the memory of the token.

In the present example, once the operating system has received a read command after selecting a data file, it expects here to receive a next read command as long as the end of file is not reached.

Depending on the available space in cache memory and depending on the communication parameters (protocol block size), the smart card prepares the next card answer.

Let's consider a chip providing 512 RAM bytes available as internal cache.

The passport contains a facial image (Elementary File) of 20K bytes in EEPROM. It must be read as fast as possible.

The data transfer session is the following one:

First, the card reader supplies power to the card to initialize communication. Then the reader selects the Facial Image file.

Then the reader reads the first 256 bytes. The reader sends a Read Binary Command and expects an answer of 256 bytes long. Because the passport has received a Read Binary Command and the file size is 20 Kbytes, the passport predicts next command as a Read Binary command from offset 256. The passport sends its current Answer that contains the 256 bytes read from offset 0000h (000 in decimal format) in the file.

The passport prepares next answer in the cache memory while waiting for a new command. The next answer contains the 256 bytes read from offset 0100h (256 in decimal format) in the file.

The passport prepares the answer to the next command in cache. Then the reader intends to read the next 256 bytes.

The reader sends a Read Binary command and expects an answer of 256 bytes long.

The passport receives the command which appears to be the expected one. The passport therefore sends its answer straightly from its internal cache memory, i.e. an answer which contains the 256 bytes read from offset 0100h of the file.

The passport predicts next command as a Read Binary from offset 0200h (512 in decimal format) in the memory and it prepares the next answer in the cache memory while waiting for a new command. The next answer will contain the 256 bytes read from offset 0200h of the file.

The passport then prepares the next command in cache.

Then the reader intends to read the next 256 bytes. The reader sends a Read Binary and expects an answer of 256 bytes long.

Then the passport receives the command which appears to be the expected one. The passport sends its answer straightly from its internal cache memory, i.e. an answer which contains the 256 bytes read from offset 0200h of the file.

It predicts next command as a Read Binary command from offset 0300h (768 in decimal format) and prepares next answer in the cache memory while waiting for a new command. The next answer will contain the 256 bytes read from offset 0300h of the file. The passport prepares such a next command in cache.

The same steps are carried out until the end of the file.

Through this example, it can be seen that the invention is particularly advantageous because it allows to prepare the next answer during the time when the memory of the token is being read by the reader. Reading Time is therefore optimized as answer preparation is done during reader activity. More generally, the invention provides a suitable solution for any Operating System implemented on a low speed micro-controller.

## Claims

1. A personal token comprising a processing and a memory equipment, **characterized in that** it comprises a logic for interpreting a received command and deducing from said received command an expected upcoming command (B, C), said logic initiating a preparation (107,107a) of an answer (B', C') to the expected command (B, C) which preparation begins before said expected command (B, C) is received.

2. The personal token according to claim 1, **characterized in that** it prepares (107a) a part of the answer (B', C') to the expected command (B, C) before said command (B, C) is received by the token, and prepares (107b) a subsequent part of the answer after the expected command (B, C) is received.

3. The personal token according to claim 1 or claim 3, **characterized in that** the said logic checks whether a received command (B, C) is the expected one and prevents delivery of the prepared answer or part of the prepared answer (B', C') in case the received command (B, C) is not the expected one .

4. The personal token according to anyone of the preceding claims, **characterized in that** it comprises a cache memory, the prepared answer or the prepared part of the answer (B', C') is stored in the cache memory before the expected command (B, C) is received, and the prepared answer or the prepared part of the answer (B',C') is read from the memory and delivered after the expected command (B, C) is received.

5. The personal token according to anyone of the preceding claims, **characterized in that** it comprises a logic for interpreting a received command (A, B, C, D) and deducing from said received command an expected command (B, C) which immediately follows the said received command (A, B, C, D).

6. The personal token according to anyone of the preceding claims, **characterized in that** the logic interprets a received command (A, B, C, D) for reading a first part of a file which is stored in the token as indicating that the following command (B, C) will be a command for reading a subsequent part of said file.

7. The personal token according to anyone of the preceding claims, **characterized in that** it constitutes an electronic passport.

8. The personal token according to anyone of the preceding claims, **characterized in that** it is a contactless personal token

9. The personal token according to anyone of claims 1 to 6, **characterized in that** it constitutes a Subscriber Identification Module in a mobile communication network.

10. The personal token according to anyone of claims 1 to 6, **characterized in that** it constitutes a credit card.

11. An operating System of a personal token, **characterized in that** it comprises a set of instructions for interpreting a received command and deducing from said received command an expected following command (B, C, D), said set of instructions initiating a preparation (107, 107a) of an answer to the following expected command (B, C) which preparation begins before said following command (B, C) is received.
